# NEUE EUROPÄISCHE PATENTSCHRIFT

(11) **EP 2 697 089 B2**
(45) Veröffentlichungstag und Bekanntmachung des Hinweises auf die Entscheidung über den Einspruch: **26.06.2024**
(45) Hinweis auf die Patenterteilung: 29.08.2018
(21) Anmeldenummer: 12727268.0
(22) Anmeldetag: 11.04.2012
(51) Int. Cl.: B60K 11/08

(54) **ELEKTRISCHER FAHRANTRIEB FÜR ELEKTROFAHRZEUGE**
ELECTRIC TRACTION DRIVE FOR ELECTRIC VEHICLES
MÉCANISME D'ENTRAÎNEMENT ÉLECTRIQUE POUR VÉHICULES ÉLECTRIQUES

(30) Priorität: 14.04.2011 DE 102011017056
(43) Veröffentlichungstag der Anmeldung: 19.02.2014
(73) Patentinhaber: Puls, Rainer M., 76227 Karlsruhe (DE); Puls, Oliver, 76227 Karlsruhe (DE)
(72) Erfinder: Puls, Rainer M., 76227 Karlsruhe (DE); Puls, Oliver, 76227 Karlsruhe (DE)
(74) Vertreter: Ullrich & Naumann PartG mbB
(86) Internationale Anmeldenummer: PCT/DE2012/100100
(87) Internationale Veröffentlichungsnummer: WO 2012/139567

(56) Entgegenhaltungen:
- EP-A1- 2 177 387
- EP-A2- 1 466 772
- WO-A1-01/83251
- WO-A1-2007/039730
- DE-A1- 3 907 382
- DE-A1- 4 236 093
- DE-A1- 10 162 883
- DE-A1- 10 339 433
- DE-U1- 20 201 379
- US-A- 5 384 521
- US-A1- 2005 247 511
- US-A1- 2007 113 679
- US-A1- 2010 025 131
- US-B1- 7 624 830
- https://de.wikipedia.org/wiki/Drehgeber

## Beschreibung

Die Erfindung betrifft einen elektrischen Fahrantrieb für Elektrofahrzeuge nach dem Oberbegriff des Patentanspruchs 1.

Es sind verschiedene Antriebe bekannt, bei denen die Anordnung von Motoren und Getrieben oft sehr ungünstig ist, und viel Platz im Fahrzeug benötigt. Denn die Radachsen und die Motorachsen sind seitlich zueinander versetzt, wodurch Verlagerungsgetriebe erforderlich werden, welche zusätzlichen Bauraum benötigen und Gewichts- und Wirkungsgrad-Nachteile nach sich ziehen.

Bauartbedingt müssen die Getriebe-Antriebswellen und die Getriebe-Abriebswellen Radialkräfte infolge von Zahnkräften oder Kettenkräfte aufnehmen, was ungünstige Auswirkungen auf Dimensionierung, Baugröße, Gehäuse-Verformungen und Wirkungsgrad hat.

Auch sind bisher bekannte Getriebesysteme nicht dafür ausgelegt, Radkräfte aufzunehmen und Längs- und Querlenker abzustützen. Hierfür ist eine zusätzliche Rahmenstruktur am Fahrzeug erforderlich, was zusätzlichen Aufwand und Gewicht bedeutet.

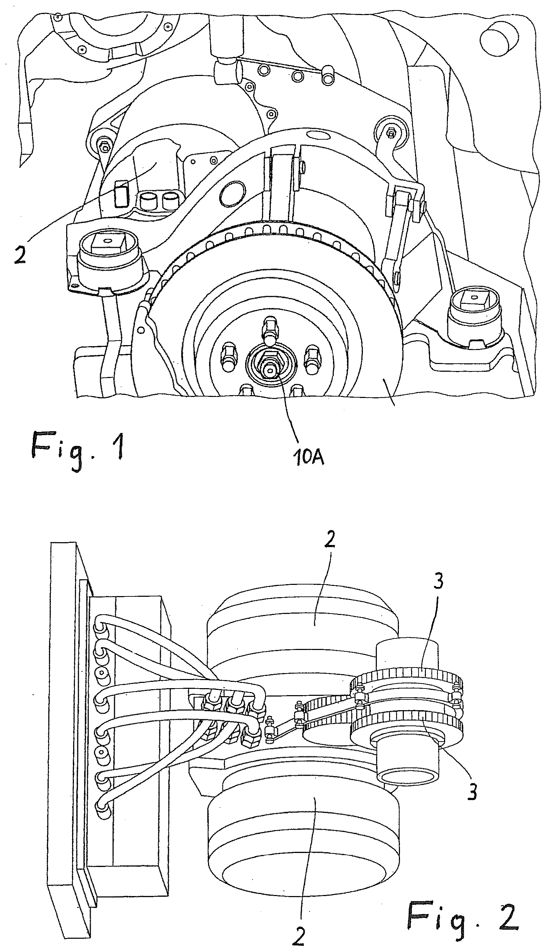

Aus Fig. 1 und Fig. 2 geht eine typische Anordnung der Antriebseinheiten nach dem Stand der Technik hervor. Die Achse des Motors 2 und die Radachse 10A sind dabei seitlich zueinander versetzt und nicht koaxial. Den seitlichen Versatz gleicht dann ein Stirnradgetriebe oder eine Kette aus. Bei der Verwendung von zwei Motoren werden dann jeweils zwei Stirnradgetriebe benötigt.

Bekannt sind auch Anordnungen, bei denen ein Elektromotor über ein Kegelradgetriebe mit zwei Abgangswellen und einem zusätzlichen Differenzial beide Räder antreibt. Hierbei ist die Anordnung jedoch auch nicht koaxial zu den Radachsen und ein zusätzliches mechanisches Differenzial ist erforderlich. Bei der Verwendung von zwei Motoren und entsprechender Ansteuerung kann das Differential auch elektronisch ausgeführt werden.

Aus der gattungsgemäßen US 2010/025131 A1 und den DE 202 01 379 U1, WO 01/83251 A1, EP 2 177 387 A1 und EP 1 466 772 A1 sind elektrische Fahrantriebe mit koaxial in einer Achse liegenden je zwei Motoren und Getrieben bekannt, wobei jedes Rad über einen eigenen Motor mit Getriebe angetrieben ist. Eine solche Bauweise ermöglicht bereits eine kompaktere Gestaltung des elektrischen Fahrantriebs, indem die Anzahl von Bauteilen zur Verlagerung von Wellenachsen verringert ist, und radiale Wellenkräfte vermieden werden.

Vor diesem Hintergrund ist die **Aufgabe** der Erfindung die Realisierung einer Anordnung von Motor und Getriebe, die
- kompakt und platzsparend ist,
- den Encoder (Positionsgeber) in die kompakte und platzsparende Anordnung einbezieht,
- die Anzahl von Bauteilen zur Verlagerung von Wellenachsen verringert,
- Gewicht und Wirkungsgrad verbessert, und
- radiale Wellenkräfte vermeidet, welche beim Stand der Technik durch Verlagerungsgetriebe wie z. B. Stirnradgetriebe oder Kettengetriebe verursacht werden.

Dieses Ziel wird erreicht durch einen elektrischen Fahrantrieb mit den in Patentanspruch 1 angegebenen Merkmalen.

Bei dieser Antriebseinheit werden Motor, Getriebe, Encoder und optionale Betriebs- und Haltebremsen sowie optionale Schaltstufen koaxial zu den Radachsen angeordnet. Realisiert wird so eine kompakte, platzsparende und koaxial zu den Radachsen ausgeführte Anordnung von Motor, Getriebe und Encoder. Die Anzahl von Bauteilen zur Verlagerung von Wellenachsen wird verringert, Gewicht und Wirkungsgrad werden dadurch verbessert. Außerdem lassen sich durch die koaxiale Bauweise radiale Wellenkräfte vermeiden, welche beim Stand der Technik durch Verlagerungsgetriebe wie z. B Stirnradgetriebe oder Kettengetriebe verursacht werden. Auch dadurch verringern sich Bauraum, Gewicht und Wirkungsgradverluste im Antrieb.

Mit einer Ausgestaltung des elektrischen Fahrantriebs wird vorgeschlagen, dass jeder Antrieb über eine eigene Leistungselektronik verfügt.

Mit einer weiteren Ausgestaltung des elektrischen Antriebs wird vorgeschlagen, dass durch die Verwendung von zwei Motoren mit zugehöriger Regelung, Sensoren und Ansteuerung ein elektronisches statt eines mechanischen Differentials ausgeführt ist.

Gemäß einer weiteren Ausgestaltung lässt sich durch Auswertung der Encoder-Werte eine Optimierung der Drehmomentverteilung an den Rädern erreichen.

Erfindungsgemäß sind beide Motoren und Getriebe in einem gemeinsamen Gehäuse untergebracht.

Weiter erfindungsgemäß ist das Motorgehäuse mit einem Kühlmantel für die Kühlung der Wicklung des Elektromotors umschlossen.

Gemäß einer weiteren Ausgestaltung ist das gemeinsame Gehäuse drehbar, zur Abstützung des Reaktionsmomentes mit einer Drehmomentstütze und zur Erfassung des Gesamt-Antriebsmomentes beider Räder mit nur einem Sensor.

Gemäß einer weiteren Ausgestaltung erfolgt die Verbindung zum Rad nicht über eine Gelenkwelle, sondern über eine starre Verbindung.

Gemäß einer weiteren Ausgestaltung ist das Gehäuse zur Aufnahme von Radkräften ausgelegt, und zur Befestigung von Quer- und Längslenkern des Fahrzeugfahrwerks.

Gemäß einer weiteren Ausgestaltung ist anstelle eines Getriebes mit fester Übersetzung ein Schaltgetriebe in koaxialer Bauweise an den Motor angebaut, wobei durch Betätigen der Bremse zwei unterschiedliche Fahrgeschwindigkeiten eingestellt werden können, und wobei bei der jeweiligen Gangstufe die zum Schalten nicht betätigte Bremse als Betriebsbremse verwendet werden kann, und wobei bei gleichzeitiger Betätigung der beiden Bremsen eine Halte-Bremsfunktion (Park-Bremse) geschaltet ist, und bei gleichzeitigem Öffnen der beiden Bremsen ein Leerlauf geschaltet ist und die Räder vom Motor abgekuppelt sind und ohne Drehen des Motors eine Abschleppfunktion gegeben ist.

Mit einer weiteren Ausgestaltung vorgeschlagen wird ein zur Radachse koaxiales, einstufiges Planetengetriebe mit einer Übersetzung größer als 13.

Mit einer weiteren Ausgestaltung wird ein zur Radachse koaxiales, einstufiges Planetengetriebe mit einer Übersetzung größer als 13 vorgeschlagen, und mit drei in Bezug auf die Radachse symmetrisch angeordneten Planetenrädern.

Mit einer weiteren Ausgestaltung wird ein zur Radachse koaxiales, einstufiges oder mehrstufiges Planetengetriebe mit zwei, drei, vier, fünf, sechs oder sieben in Bezug auf die Radachse symmetrisch angeordneten Planetenrädern pro Stufe vorgeschlagen.

Mit einer weiteren Ausgestaltung wird vorgeschlagen, dass pro Rad des Fahrzeugs eine Betriebsbremse koaxial zur Radachse angeordnet ist.

Mit einer weiteren Ausgestaltung wird vorgeschlagen, dass pro Rad des Fahrzeugs eine Haltebremse koaxial zur Radachse angeordnet ist.

Mit einer weiteren Ausgestaltung wird vorgeschlagen, dass pro Rad des Fahrzeugs ein Schwungrad zur Energiespeicherung kinetischer Energie und zur Energieabgabe koaxial zur Radachse angeordnet ist, d.h. auch die Drehachse einer solchen Schwungmasse befindet sich auf derselben Achse wie Motor, Getriebe und Encoder.

Gemäß einer nicht erfindungsgemäßen Ausgestaltung verfügen die beiden Elektromotoren nicht über ein gemeinsames Gehäuse, sondern über je ein eigenes Motorgehäuse. Dieses ist drehbar, zur Abstützung des Reaktionsmomentes mit einer Drehmomentstütze und zur Erfassung des Antriebsmomentes des einzelnen Rades mittels jeweils eines Sensors.

Gemäß einer nicht erfindungsgemäßen Ausgestaltung verfügen die beiden Elektromotoren nicht über ein gemeinsames Gehäuse, sondern über je ein eigenes Motogehäuse. Dieses ist derart gelagert, dass eine Abstützung des Reaktionsmomentes der einen Antriebseinheit auf die entsprechend andere Antriebseinheit erfolgt, sowie außerdem eine Abstützung des gesamten Reaktionsmomentes gegenüber der Umgebung. Auf diese Weise sind mittels jeweils eines Sensors an jeder Drehmomentstütze Rückschlüsse über die Antriebsmomente jedes der beiden angetriebenen Räder möglich.

Ferner wird vorgeschlagen, in Verbindung mit der Auswertung der Encoder-Werte und entsprechender Lastsensoren, die den Lastzustand des Fahrzeugs erfassen, eine Optimierung der Drehmomentverteilung (sogenanntes Torque-Vectoring) an den Rädern durchzuführen.

Ferner wird vorgeschlagen, in Verbindung mit der Auswertung der Encoder-Werte und entsprechender Lastsensoren, die den Lastzustand des Fahrzeugs erfassen, und durch Regelung der Motoren, sowohl im motorischen, als auch im generatorischen Betrieb des Fahrzeugs Fahrdynamikregelungen durchzuführen.

In Verbindung mit der Auswertung der Encoder-Werte durch Regelung der Motoren im generatorischen Betrieb lässt sich eine Betriebsbremse mit Bremsschlupfregelung realisieren.

In Verbindung mit der Auswertung der Encoder-Werte und durch Regelung der Motoren, sowohl im motorischen als auch im generatorischen Betrieb, sind Bremsschlupfregelungen und Antriebsschlupfregelungen möglich.

In Verbindung mit der Auswertung der Encoderwerte durch Regelung der Motoren im generatorischen Betrieb ist eine Betriebsbremse mit Bremsschlupfregelung realisierbar. In diesem Fall ist das Fahrzeug mit zusätzlichen, an den Getriebeabtriebsweilen wirkenden und am Getriebegehäuse abgestützten Bremsen ausgestattet.

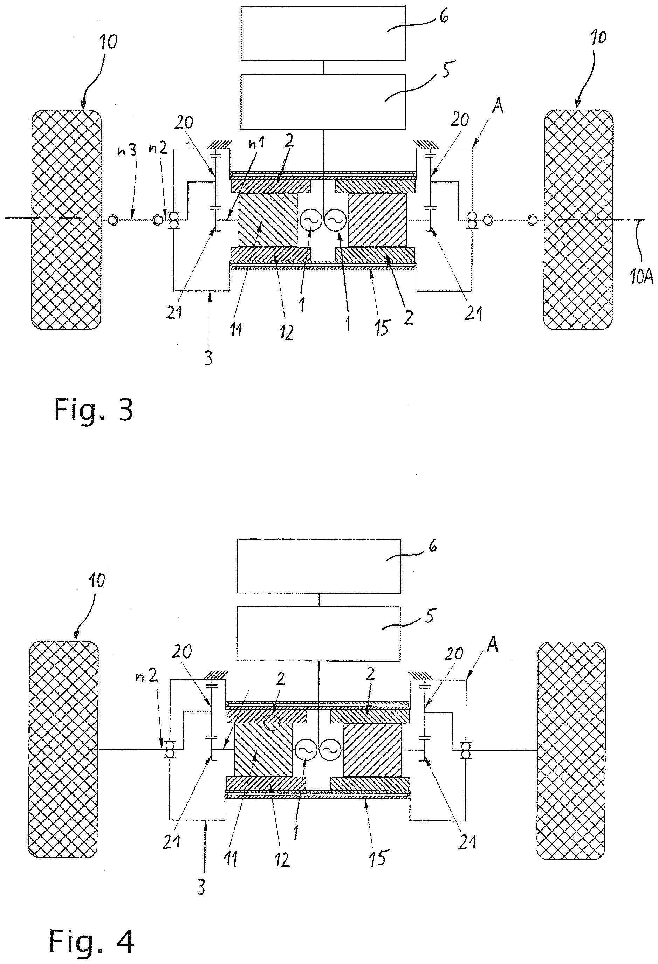

Im Folgenden werden, beginnend mit Fig. 3, mehrere Ausführungsbeispiele der Erfindung unter Bezugnahme auf die weiteren Figuren genauer erläutert. Im Einzelnen zeigen
Fig. 1 eine typische Anordnung einer Antriebseinheit nach dem Stand der Technik;
Fig. 2 eine andere typische Anordnung einer Antriebseinheit nach dem Stand der Technik;
Fig. 3 eine Anordnung einer Antriebseinheit nach der Erfindung;
Fig. 4 eine weitere Anordnung einer Antriebseinheit nach der Erfindung;
Fig. 5 eine weitere Anordnung einer Antriebseinheit nach der Erfindung;
Fig. 5a eine nicht erfindungsgemäße Anordnung einer Antriebseinheit nach der Erfindung;
Fig. 5b eine nicht erfindungsgemäße Anordnung einer Antriebseinheit nach der Erfindung;
Fig. 6 eine weitere Anordnung einer Antriebseinheit nach der Erfindung.

Fig. 3 zeigt den schematischen Aufbau eines elektrischen Fahrantriebs für ein Elektrofahrzeug, bestehend aus Encoder 1, Elektromotor 2, Planetengetriebe 3 und Abtriebswelle n2, welche über eine Gelenkwelle oder auch über eine starre Welle mit dem Fahrzeugrad 10 verbunden werden kann. Bei Verwendung der Gelenkwelle n3 ist der beschriebene Antrieb auch für gelenkte Fahrzeugachsen einsetzbar.

Das Gehäuse A ist ein gemeinsames Gehäuse und nimmt in achsengleicher Anordnung die Encoder 1, die Elektromotoren 2 und die Planetengetriebe 3 auf. Jedoch ist auch ein aus einzelnen axial hintereinander angeordneten Gehäuseabschnitten zusammengesetztes Gehäuse A möglich. In diesem Fall sind die einzelnen Gehäuseabschnitte zu ihrer Verbindung mit Flanschen versehen.

Die Anordnung der Leistungselektronik 5 und der die Antriebsenergie bereitstellenden Batterie 6 ist beispielsweise in dem Platz zwischen den beiden Planetengetrieben 3 möglich.

Denn der Gehäusedurchmesser im Bereich des Motors 2 fällt kleiner aus, als der für das Planetengetriebe 3 erforderliche Gehäusedurchmesser. Eine Befestigung der Leistungselektronik 5 am Gehäuse A kann von Vorteil sein. Gleiches gilt für die Batterie 6.

Fig. 4 zeigt eine Ausführungsform, bei der die Getriebe-Ausgangswelle n2 und das Rad 10 starr verbunden sind, z.B. als Radnabenantrieb.

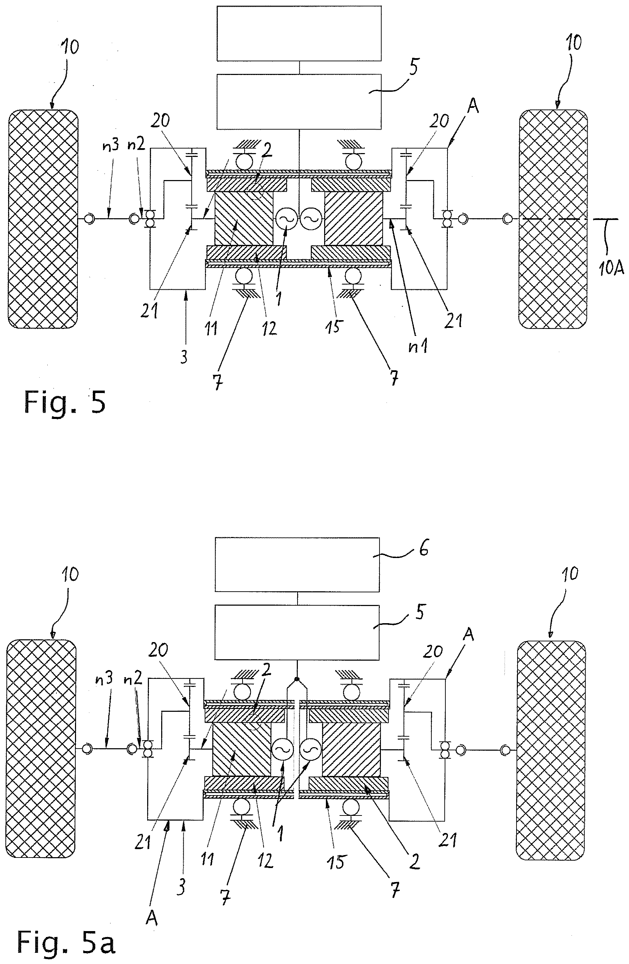

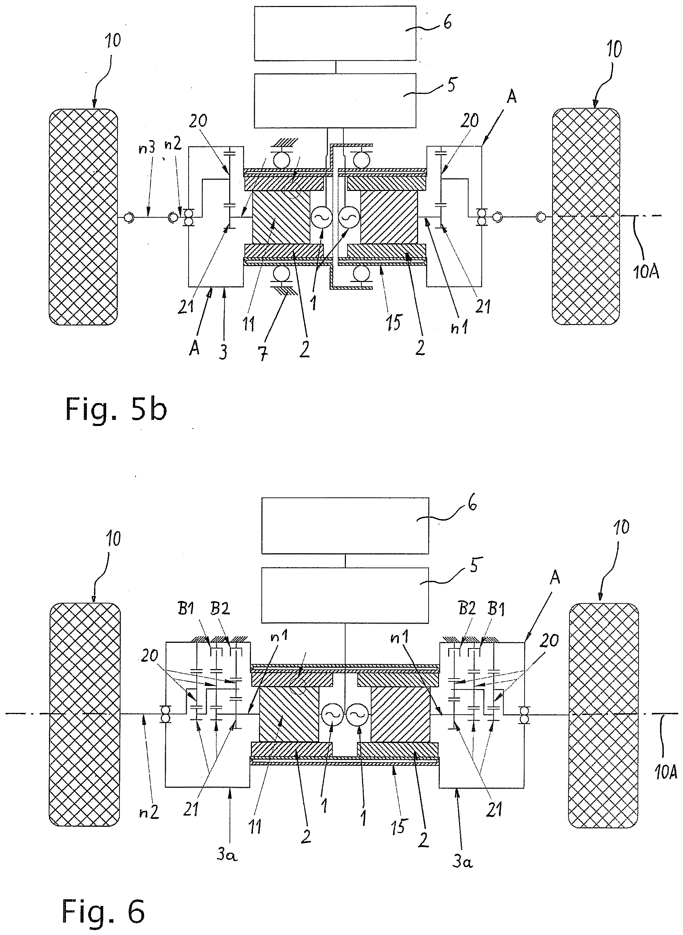

Fig. 5 zeigt schematisch, dass das Motor- und Getriebegehäuse A gegenüber dem Fahrzeugchassis 7 oder den Fahrwerksteilen drehbar gelagert sein kann. In diesem Fall wird das Reaktionsmoment des Fahrantriebs mit einer Drehmomentstütze vom Fahrzeugchassis 7 oder den Fahrwerksteilen aufgenommen. Dies ermöglicht, das gesamte Antriebsmoment der Achse über nur einen Sensor zu erfassen.

Bei Fig. 5 haben beide Motor- und Getriebeeinheiten ein gemeinsames und daher auch gemeinsam drehbares Gehäuse A.

In Fig. 5a verfügen die Elektromotoren 2 für den rechten und linken Radantrieb nicht über ein gemeinsames Gehäuse, sondern über je ein eigenes Gehäuse A. Dieses ist gegenüber dem Fahrzeugchassis 7 oder den Fahrwerksteilen drehbar zur Abstützung des Reaktionsmomentes mit einer Drehmomentstütze, und ist zur Erfassung des Antriebsmomentes des einzelnen Rades mit jeweils einem Sensor versehen. Es ist also ein Sensor für den linken, und ein separater Sensor für den rechten Radantrieb vorhanden.

Auch in Fig. 5b verfügen die Motoren 2 nicht über ein gemeinsames Gehäuse, sondern über je ein einzelnes Gehäuse A. Dieses ist derart gelagert, dass eine Abstützung des Reaktionsmomentes der einen Antriebseinheit auf die entsprechend andere Antriebseinheit ermöglicht wird. Es erfolgt eine Abstützung des gesamten Reaktionsmomentes gegenüber der Umgebung, z.B. dem Fahrzeugchassis, wodurch mittels jeweils eines Sensors an jeder Drehmomentstütze Rückschlüsse auf die Größe der Antriebsmomente jedes Rades gezogen werden können.

Fig. 6 zeigt schematisch die Darstellung eines koaxialen Fahrantriebs, bei dem das Getriebe als zweistufiges Planeten-Schaltgetriebe 3a mit nachgelagerter Planetenstufe ausgeführt ist. Es können somit Übersetzungen im Bereich von i = n1/n2 = 6 bis i = n1/n2 = 100 realisiert werden, und Stufensprünge bis zum Wert 6.

Bei dieser Ausführungsform sind auf beiden Fahrzeugseiten Bremsen B1 und B2 vorhanden und vorzugsweise in das Gehäuse A baulich integriert.

Betätigt man die Bremse B1 und öffnet B2, so ist die Übersetzungsstufe i1 = n1/ n2 geschaltet. In diesem Zustand wird die Bremse B2 zur Betriebsbremse.

Wird die Bremse B2 betätigt und die Bremse B1 geöffnet, so ist die Schaltstufe i2 = n1/n2 eingelegt. Die Bremse B1 wird in dieser Schaltstufe zur Betriebsbremse.

Werden beide Bremsen B1 und B2 betätigt, so ergibt sich eine Haltebremsfunktion bzw. eine Parkbremse.

Werden beide Bremsen B1 und B2 geöffnet, so ist der Motor 2 entkuppelt. Ein Leerlauf bzw. Freilauf ist geschaltet, und das Fahrzeug kann abgeschleppt werden ohne dass der Motor 2 dreht.

Die Figuren 1 und 2 zeigen Bilder heutiger typischer Anordnungen von Motor 2, Getriebe und Rad mit Radachse 10A. Es besteht ein seitlicher Versatz zwischen den Antriebswellen des Motors 2 und der Radachse 10A, welcher durch Verlagerungsgetriebe ausgeglichen werden muss.

Bei der Ausführungsform nach Fig.3 ist der für die Antriebssteuerung erforderliche Encoder 1 des Elektromotors 2 direkt mit der Motorwelle verbunden und ohne weitere Zwischenelemente zur Wellenverlagerung koaxial mit der Motorwelle verbunden. Gleiches gilt für die Sonnenradwelle n1, welche den besonderen Vorteil bietet, dass sie nur Drehmoment und keine Radialkräfte übertragen muss, da sich die Kräfte aufgrund der symetrischen Anordnung der Planetenräder 20 aufheben. Vorzugsweise handelt es sich hier um drei Planetenräder 20, die die Zentrierung des Sonnenrades 21 gewährleisten.

Da die Sonnenradwelle n1 frei von Radialkräften ist, benötigt sie keine eigene Lagerung. Dadurch kann auf eine Abdichtung zwischen Getriebe 3 und Motor 2 verzichtet werden. Dies führt zu einer erheblichen Verminderung von Reibungsverlusten, wie sie sonst mit reibenden Dichtungen verbunden sind.

Durch die Anordnung von Motor 2 und Getriebe 3, 3a koaxial hintereinander, d.h. achsengleich, ist es möglich, einen Kühlmantel 15 um die Motorwicklungen des Elektromotors zu legen, ohne dass dabei Gehäuseteile der Verlagerungsgetriebe stören, welche bauartbedingt nebeneinander liegen können und den verfügbaren Raum für einen Kühlmantel 15 einschränken.

Zur Erhöhung der Drehmomente an den Rädern sowie zur Variation der Drehmomente je nach Fahrsituation ist das in Fig. 6 dargestellte, zweistufige Planeten-Schaltgetriebe 3a in koaxialer Bauform koaxial zur Radachse 10A von Vorteil. Durch Verwendung von nur zwei Bremsen oder auch Kupplungen B1 und B2 lassen sich sowohl zwei Fahrgeschwindigkeiten, als auch die jeweilige Betriebsbremse und Parkbremse und ein Leerlauf realisieren.

Das Planetengetriebe mit fester Übersetzung nach Fig. 3 wird vorzugsweise als einstufiges Planetengetriebe mit eine Übersetzung bis zu i = 14 ausgeführt, da es als einstufiges Planetengetriebe einen wesentlich höheren Wirkungsgrad hat, als die heute für eine solch hohe Übersetzung verwendeten, zweistufigen Planetengetriebe.

Des Weiteren führt die einstufige Bauweise zu einer kürzeren Baulänge, was die Verwendung des Fahrantriebs auch für Fahrzeuge mit geringer Spurweite vorteilhaft macht.

### Bezugszeichenliste

- 1: Encoder
- 2: Motor
- 3: Planetengetriebe
- 3a: Planeten-Schaltgetriebe
- 5: Leistungselektronik
- 6: Batterie
- 7: Fahrzeugchassis oder -Fahrwerk
- 10: Rad
- 10A: Radachse
- 11: Rotor des Motors
- 12: Stator des Motors
- 15: Kühlmantel
- 20: Planetenrad
- 21: Sonnenrad

- A: Gehäuse

- B1: Bremse
- B2: Bremse

- n1: Sonnenradwelle
- n2: Getriebe-Ausgangswelle

## Patentansprüche

1. Elektrischer Fahrantrieb für Elektrofahrzeuge mit koaxial in einer Achse liegenden je zwei Motoren (2), Getrieben (3, 3a), Encodern (1), wobei jedes Rad (10) über einen eigenen Motor (2) mit Getriebe (3) und Encoder (1) angetrieben ist, wobei jeweils der Motor (2) mit dem Getriebe (3, 3a) in einem gemeinsamen Gehäuse (A) angeordnet ist, und wobei beide Motoren (2) und Getriebe (3, 3a) in einem gemeinsamen Gehäuse (A) angeordnet sind
**dadurch gekennzeichnet, dass** das Motorgehäuse (A) von einem Kühlmantel (15) für die Kühlung der Motorwicklung umschlossen ist.

2. Fahrantrieb nach Anspruch 1, **dadurch gekennzeichnet, dass** jeder Antrieb über eine eigene Leistungselektronik (5) verfügt.

3. Fahrantrieb nach Anspruch 1 oder 2, **dadurch gekennzeichnet, dass** das gemeinsame Gehäuse (A) drehbar angeordnet ist, zur Abstützung des Reaktionsmomentes mit einer Drehmomentstütze und zur Erfassung des Gesamt-Antriebmomentes beider Räder (10) mit nur einem Sensor.

4. Fahrantrieb nach einem der vorangegangenen Ansprüche, **dadurch gekennzeichnet, dass** die Verbindung vom Getriebe (3) zum Rad (10) über eine starre Verbindung (n2) erfolgt.

5. Fahrantrieb nach einem der vorangegangen Ansprüche, **dadurch gekennzeichnet, dass** das Gehäuse (A) zur Aufnahme von Radkräften, und zur Befestigung von Quer- und Längslenkern ausgebildet ist.

6. Fahrantrieb nach einem der vorangegangen Ansprüche, **dadurch gekennzeichnet, dass** ein Schaltgetriebe (3a) in koaxialer Bauweise an den Motor (2) angebaut ist, dass durch Betätigen einer Bremse (B1 oder B2) zwei unterschiedliche Fahrgeschwindigkeiten einstellbar sind, dass bei der jeweiligen Gangstufe die zum Schalten nicht betätigte Bremse als Betriebsbremse verwendet wird, dass bei gleichzeitiger Betätigung der Bremsen (B1) und (B2) eine Halte-Bremsfunktion (ParkBremse) geschaltet ist, und dass bei gleichzeitigem Öffnen der Bremse (B1) und (B2) ein Leerlauf geschaltet ist und die Räder (10) vom Motor (2) abgekuppelt sind.

7. Fahrantrieb nach einem der vorangegangen Ansprüche, **gekennzeichnet durch** ein zur Radachse koaxiales, einstufiges Planetengetriebe (3) mit einer Übersetzung größer als 13.

8. Fahrantrieb nach einem der Ansprüche 1 bis 6, **gekennzeichnet durch** ein zur Radachse koaxiales, einstufiges Planetengetriebe (3) Übersetzung größer als 13, und mit drei symmetrisch angeordneten Planetenrädern (20).

9. Fahrantrieb nach einem der Ansprüche 1 bis 7, **gekennzeichnet durch** ein zur Radachse (10A) koaxiales, einstufiges oder mehrstufiges Planetengetriebe (3) mit 2, 3, 4, 5, 6 oder 7 symmetrisch angeordneten Planetenrädern (20) pro Stufe.

10. Fahrantrieb nach einem der vorangegangenen Ansprüche, **dadurch gekennzeichnet, dass** pro Rad (10) eine Betriebsbremse koaxial zur Radachse (10A) angeordnet ist.

11. Fahrantrieb nach einem der vorangegangenen Ansprüche, **dadurch gekennzeichnet, dass** pro Rad (10) eine Haltebremse koaxial zur Radachse (10A) angeordnet ist.

12. Fahrantrieb nach einem der vorangegangenen Ansprüche, **dadurch gekennzeichnet, dass** pro Rad (10) je ein Schwungrad zur Energiespeicherung und zur Energieabgabe koaxial zur Radachse (10A) angeordnet ist

## Claims

1. Electric traction drive for electric vehicles having in a state located coaxially in an axis in each case two motors (2), gear mechanisms (3, 3a), encoders (1), wherein each wheel (10) is driven by means of an individual motor (2) having a gear mechanism (3) and encoder (1), wherein the motor (2) is arranged in each case with the gear mechanism (3, 3a) in a common housing (A), and in that both motors (2) and gear mechanisms (3, 3a) are arranged in a common housing (A),
**characterised in that** the motor housing (A) is surrounded by a cooling cover (15) for the cooling of the motor winding.

2. Traction drive according to claim 1, **characterised in that** each drive has its own electronic power system (5).

3. Traction drive according to claim 1 or 2, **characterised in that** the common housing (A) is rotatably arranged in order to support the reaction torque with a torque support and in order to detect the total drive torque of both wheels (10) with only one sensor.

4. Traction drive according to any one of the preceding claims, **characterised in that** the connection from the gear mechanism (3) to the wheel (10) is carried out via a rigid connection (n2).

5. Traction drive according to any one of the preceding claims, **characterised in that** the housing (A) is constructed to receive wheel forces and to secure transverse and
longitudinal links.

6. Traction drive according to any one of the preceding claims, **characterised in that** a gearbox (3a) is installed in a coaxial manner in the motor (2), **in that** two different travel speeds can be adjusted by activating a brake (B1 or B2), **in that** with the respective gear the brake which is not activated for switching is used as an operating brake, **in that**, when the brakes (B1) and (B2) are activated at the same time, a holding brake function (parking brake) is engaged and **in that**, when the brakes (B1) and (B2) are opened at the same time, an idle mode is engaged and the wheels (10) are decoupled from the motor (2).

7. Traction drive according to any one of the preceding claims, **characterised by** a single-stage planetary gear mechanism (3) which is coaxial relative to the wheel axle and which has a transmission ratio greater than 13.

8. Traction drive according to any one of the preceding claims, **characterised by** a single-stage planetary gear mechanism (3) which is coaxial relative to the wheel axle and which has a transmission ratio greater than 13 and which has three planet wheels (20) which are arranged symmetrically.

9. Traction drive according to any one of the claims 1 to 7, **characterised by** a single-stage or multi-stage planetary gear mechanism (3) which is coaxial relative to the wheel axle (10A) and which has 2, 3, 4, 5, 6 or 7 symmetrically arranged planet wheels (20) per stage.

10. Traction drive according to any one of the preceding claims, **characterised in that** one operating brake per wheel (10) is arranged coaxially relative to the wheel axle (10A).

11. Traction drive according to any one of the preceding claims, **characterised in that** one holding brake per wheel (10) is arranged coaxially relative to the wheel axle (10A).

12. Traction drive according to any one of the preceding claims, **characterised in that** one flywheel per wheel (10) for energy storage and for energy output is arranged coaxially relative to the wheel axle (10A).

## Revendications

1. Dispositif d'entraînement électrique pour des véhicules électriques avec deux moteurs (2), transmissions (3, 3a), encodeurs (1), coaxiaux sur un axe, chaque roue (10) étant entraînée par son propre moteur (2) avec transmission et encodeur (1), le moteur (2) étant disposé avec la transmission (3, 3a) dans un carter commun (A), les deux moteurs (2) et transmissions (3, 3a) sont disposés dans un carter commun (A),
**caractérisé en ce que** le carter du moteur (A) est entouré par une enveloppe extérieure de refroidissement (15) pour le refroidissement du bobinage du moteur.

2. Dispositif d'entraînement selon la revendication 1, **caractérisé en ce que** chaque entraînement dispose de sa propre électronique de puissance (5).

3. Dispositif d'entraînement selon la revendication 1 ou 2, **caractérisé en ce que** le carter commun (A) est disposé de manière rotative, pour le support du couple de réaction, avec un support de couple et, pour la mesure du couple d'entraînement total, des deux roues (10), avec un seul capteur.

4. Dispositif d'entraînement selon l'une des revendications précédentes, **caractérisé en ce que** la liaison entre la transmission (3) et la roue (10) a lieu par l'intermédiaire d'une liaison rigide (n2).

5. Dispositif d'entraînement selon l'une des revendications précédentes, **caractérisé en ce que** le carter (A) est conçu pour l'absorption des forces des roues, et pour la fixation de bras transversaux et longitudinaux.

6. Dispositif d'entraînement selon l'une des revendications précédentes, **caractérisé en ce qu'**une boîte de vitesses (3a) est montée de manière coaxiale par rapport au moteur (2), **en ce que** l'actionnement d'un frein (B1 ou B2) permet de régler deux vitesses de déplacement différentes, **en ce que** dans le rapport concerné, le frein non actionné est utilisé comme frein de service, **en ce que** lors d'un actionnement simultané des freins (B1) et (B2), une fonction de frein de maintien (frein de stationnement) est enclenchée et **en ce que** lors d'une ouverture simultanée du frein (B1) et (B2), une marche à vide est enclenchée et les roues (10) sont découplées du moteur (2).

7. Dispositif d'entraînement selon l'une des revendications précédentes, **caractérisé par** un engrenage planétaire à un étage (3) coaxial par rapport à l'essieu, avec un rapport de transmission supérieur à 13.

8. Dispositif d'entraînement selon l'une des revendications précédentes, **caractérisé par** un engrenage planétaire à un étage (3) coaxial par rapport à l'essieu, avec un rapport de transmission supérieur à 13 et avec trois pignons planétaires (20) disposés de manière symétrique.

9. Dispositif d'entraînement selon l'une des revendications 1 à 7, **caractérisé par** un engrenage planétaire à un étage ou à plusieurs étages (3) coaxial par rapport à l'essieu (10A), avec 2, 3, 4, 5, 6 ou 7 pignons planétaires (20) disposés de manière symétrique par étage.

10. Dispositif d'entraînement selon l'une des revendications précédentes, **caractérisé en ce que**, sur chaque roue (10), est disposé un frein de service coaxial par rapport à l'essieu (10A).

11. Dispositif d'entraînement selon l'une des revendications précédentes, **caractérisé en ce que**, sur chaque roue (10), est disposé un frein de maintien coaxial par rapport à l'essieu (10A).

12. Dispositif d'entraînement selon l'une des revendications précédentes, **caractérisé en ce que**, sur chaque roue (10), est disposée un volant d'inertie, coaxial par rapport à l'essieu (10A), pour l'accumulation d'énergie et pour la génération d'énergie.
